# EUROPÄISCHE PATENTSCHRIFT

(11) **EP 1 569 812 B1**
(45) Veröffentlichungstag und Bekanntmachung des Hinweises auf die Patenterteilung: **28.02.2007**
(21) Anmeldenummer: 03767439.7
(22) Anmeldetag: 18.11.2003
(51) Int. Cl.: B60J 5/04

(54) **KRAFTFAHRZEUGTÜR**
MOTOR VEHICLE DOOR
PORTIERE DE VEHICULE

(30) Priorität: 29.11.2002 DE 10256131
(43) Veröffentlichungstag der Anmeldung: 07.09.2005
(73) Patentinhaber: Brose Fahrzeugteile GmbH & Co. KG, Coburg, 96450 Coburg (DE)
(72) Erfinder: DOHLES, Hilmar, 96274 Itzgrund (DE); HAUBOLD, Thomas, 95336 Mainleus (DE); BÜCKER, Rolf, 96047 Bamberg (DE); EISENTRAUDT, Michael, 96342 Stockheim (DE); POHL, Thomas, 91091 Grossenseebach (DE); STAMMBERGER, Werner, 96253 Weissenbrunn (DE)
(74) Vertreter: Ninnemann, Detlef
(86) Internationale Anmeldenummer: PCT/DE2003/003843
(87) Internationale Veröffentlichungsnummer: WO 2004/050406

(56) Entgegenhaltungen:
- US-A- 5 171 058
- US-A- 5 865 496
- US-B1- 6 305 738

## Beschreibung

Die Erfindung betrifft eine Kraftfahrzeugtür gemäß dem Oberbegriff des Anspruchs 1.

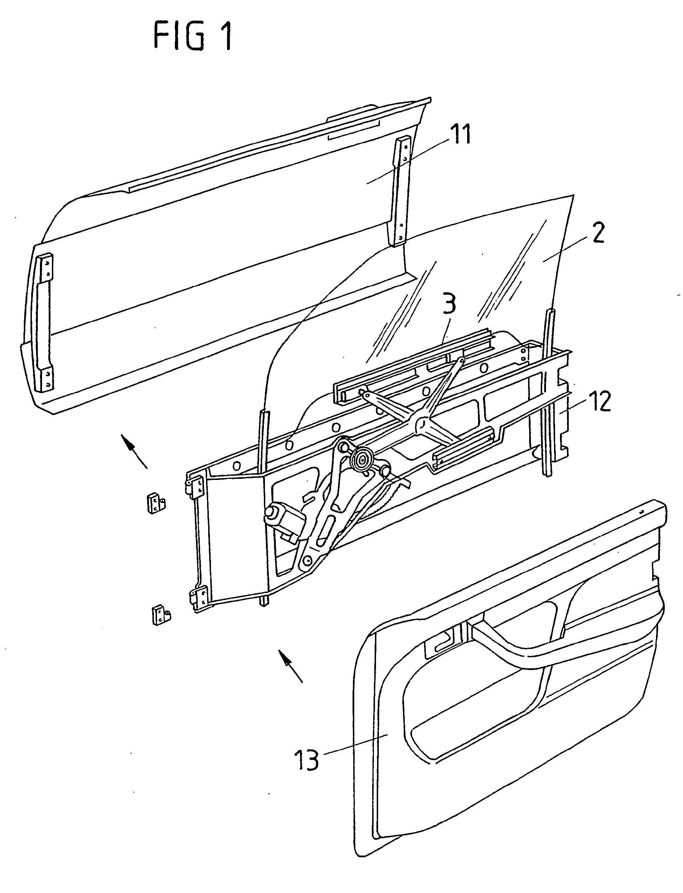

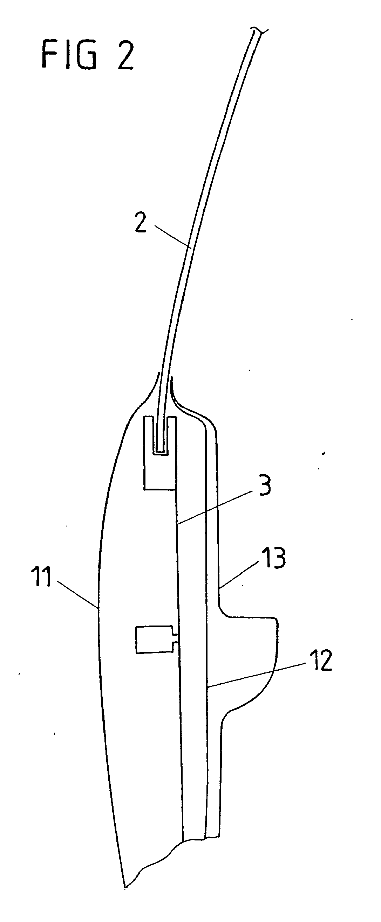

Eine Kraftfahrzeugtür 1 besteht entsprechend der perspektivischen Explosionsdarstellung gemäß Fig. 1 und dem Längsschnitt durch eine Kraftfahrzeugtür gemäß Fig. 2 aus miteinander verbundenen Türschalen 11, 12, von denen die Türaußenschale oder das Türaußenblech 11 der Kraftfahrzeugkarosserie angepasst und die Türinnenschale oder das Türinnenblech 12 mit einer Türinnenverkleidung 13 verbunden ist. Zwischen der Türaußenschale 11 und der Türinnenschale 12 ist ein Türschacht 10 ausgebildet, in dem verschiedene Türaggregate, unter anderem ein Fensterheber 3 zum Anheben und Absenken einer Fensterscheibe 2 aus dem und in den Türschacht 10 ggf. auf einem Türmodulträger angeordnet sind. Den oberen Abschluss des Türschachtes 10 bildet eine Türschachtleiste 14, durch die die Fensterscheibe 2 beim Anheben durch den Fensterheber 3 aus dem Türschacht 10 austritt und eine oberhalb des Türschachtes 10 vorgesehene Türöffnung verschließt.

Durch die Anordnung der mittels des Fensterhebers 3 aufwärts und abwärts beweglichen Fensterscheibe 2 ist eine konstruktive Verbindung zwischen der Türaußenschale 11 und der Türinnnenschale 12 innerhalb des Türschachtes 10 nicht möglich, da der Türrohbau bzw. der Türkörper infolge der Fensterscheibe 2 bzw. des Fensterhebers 3 zweigeteilt ist, so dass sowohl die Türaußenschale 11 als auch die Türinnenschale 12 mit ihrer Eigensteifigkeit den Türrohbau und dessen Steifigkeit definieren, die im Verbund von Türaußenschale und Türinnenschale durch eine kraftschlüssige Verbindung wesentlich höher wäre. Die Steifigkeit der Kraftfahrzeugtür ist daher gegenüber der Kraftfahrzeugkarosserie herabgesetzt, da diese eine kraftschlüssige Verbindung zwischen der Außenschale und der Innenschale zulässt und damit größere Aufprallsicherheiten gegenüber Seiten- und Frontcrashsituationen bietet.

Zur Anpassung der Seiten- und Frontcrashsicherheit einer Kraftfahrzeugtür an die Kraftfahrzeugkarosserie wäre nur durch die Verwendung stärkerer Materialien für die Türschalen oder durch zusätzliche Versteifungen der Türaußenschale 11 und der Türinnenschale 12 möglich. Durch beide Maßnahmen wird jedoch das Gewicht der Kraftfahrzeugtür deutlich erhöht.

Ein weiteres Problem bei der Konstruktion von Kraftfahrzeugtüren besteht darin, dass die obere Türschachtleiste 14 sowohl in Bezug auf Witterungseinflüsse als auch in Bezug auf Einbruchsicherheit eine Schwachstelle darstellt. Trotz der Anordnung von Abdichtungselementen, die dichtend an der Fensterscheibe 2 anliegen, besteht die Gefahr des Eintritts von Feuchtigkeit in den Türschacht 10, insbesondere bei gealterten oder beschädigten Abdichtungselementen. Um einen Einbruch in den Türschließmechanismus von außen zu verhindern, der über die offene Türschachtleiste 14 sehr einfach ist, müssen mit erheblichen Aufwand und Kosten Schlossabdeckungen vorgesehen werden, die einen Einbruch in das Kraftfahrzeug zumindest erschweren.

Aus der FR 2 626 534 ist eine Kraftfahrzeugtür bekannt, bei der zur Vereinfachung der Handhabung in der Serienfertigung bzw. zum Einsatz eines Robotersystems bei der Verbindung einer mit Türkomponenten wie einem Türschloss, einer Betätigungsstange mit Haltevorrichtung für das Türschloss, einer beweglichen Fensterscheibe, einem Fensterheber und dgl. vorbestückten modularen Innenschale mit einer tiefgezogenen Außenschale mit einem Fensterrahmen und Scharnieren zur Befestigung der Kraftfahrzeugtür an einer Fahrzeugkarosserie die Außenschale an den seitlichen Enden des Fensterrahmens zwei Verriegelungselemente für eine Querverbindung der modularen Innenschale mit der Außenschale aufweist. Die beiden an den seitlichen Enden vorgesehenen Verriegelungselemente sind schwenkbar an einer senkrecht zur Fläche der Außenschale verlaufenden Ebene befestigt und weisen ein Einführteil zur Aufnahme der modularen Innenschale auf, das mittels einer Rückstellfeder in Richtung der Außenschale vorgespannt ist. Weiterhin enthält das Einführteil zur Aufnahme der modularen Innenschale einen Anschlag, der mit einem Haken verriegelbar ist, wenn die modulare Innenschale ihre Gebrauchsstellung an der Außenschale eingenommen hat. In der Gebrauchsstellung greift die Fensterscheibe in die seitlichen Führungsschienen des Fensterhebers in den oberen Teil der Außenschale ein.

Aufgabe der vorliegenden Erfindung ist es, die Sicherheit einer Kraftfahrzeugtür ohne Einschränkung des Platzbedarfs und der Beweglichkeit des Fensterhebers oder der Fensterscheibe zu erhöhen.

Diese Aufgabe wird erfindungsgemäß durch die Merkmale des Anspruchs 1 gelöst.

Die erfindungsgemäße Lösung gewährleistet eine erhöhte Sicherheit des Türkörpers einer Kraftfahrzeugtür ohne Funktionseinschränkungen oder bauliche Beschränkungen des Fensterhebers oder der Fensterscheibe einer Kraftfahrzeugtür.

Wesentlich bei der Realisierung der erfindungsgemäßen Lösung ist, dass das Bauteil als kraftübertragendes und/oder als ein den Türspalt abdeckendes Bauteil ausgebildet ist.

Zur Einbruchssicherung erstreckt sich das Bauteil wenigstens über den Bereich des Türschlosses und/oder der mit dem Türschloss verbundenen Teile wie Gestänge, Bowden und dergleichen.

Durch die Verbindung der Fensterscheibe bzw. des Fensterhebers mit der Türaußenschale und/oder der Türinnenschale können Versteifungselemente des Türkörpers so miteinander verbunden werden, dass der Türkörper als geschlossene Einheit wirkt. Durch eine kraft- und/oder formschlüssige Verbindung der Fensterscheibe bzw. des Fensterhebers mit der Türaußenschale und/oder der Türinnenschale oder der Türaußenschale unmittelbar mit der Türinnenschale wird eine erhöhte Eigensteifigkeit erzielt, die bei Seiten- und Frontcrashsituationen die Sicherheit der Kraftfahrzeugtür deutlich erhöht, ohne dass zusätzliche Versteifungsmaßnahmen an der Türaußenschale und/oder Türinnenschale vorgenommen oder die Festigkeit des Materials der Türschalen selbst erhöht werden muss. Das kraftübertragende Bauteil kann unmittelbar am Fensterheber oder direkt an der Fensterscheibe befestigt werden und die Struktur des Türkörpers im oberen Anschlag des Fensterhebers oder über den Scheibenhub auf Zug- oder Druckbelastung unterstützen.

Auch bei alleiniger Anordnung eines kraftübertragenden Bauteils zwischen der Fensterscheibe bzw. dem Fensterheber und einer der beiden Türschalen erhöht die erfindungsgemäße Lösung die Sicherheit der Kraftfahrzeugtür gegen Fremdeingriffe, da das Bauteil die obere Öffnung des Türschachtes verschließt und damit den Zugang zum Türschloss über die Türschachtleiste blockiert. Dadurch werden zusätzliche Sicherungsmaßnahmen zum Schutz des Türschlosses beispielsweise mittels einer Türschlossabdeckung überflüssig.

Dementsprechend ist mindestens ein Bauteil mit einer Türschale verbunden und federelastisch an der Fensterscheibe oder dem Fensterheber abgestützt.

Das Bauteil kann als ein mit der Bewegung der Fensterscheibe oder des Fensterhebers lageveränderliches Bauteil ausgebildet werden, das sich bei einer vorgegebenen Stellung der Fensterscheibe oder des Fensterhebers formschlüssig mit einer Türschale verbindet. Insbesondere kann das Bauteil mit Vorspannung an der Fensterscheibe oder am Fensterheber anliegen und beim Anheben der Fensterscheibe oder des Fensterhebers aus dem Türschacht mittels eines an der Fensterscheibe oder am Fensterheber angeordneten Mitnehmers oder Auflagers in eine kraftübertragende Stellung mit einer Türschale verschwenken.

In dieser Variante der erfindungsgemässen Lösung weist das Bauteil insbesondere einen längenveränderlichen Schwenkarm und einen mit dem Schwenkarm verbundenen Überbrückungsarm auf, dessen eines Ende über ein Gleitstück an der Fensterscheibe oder dem Fensterheber anliegt und dessen anderes Ende zur Verbindung mit einer Türschale bei einer vorgegebenen Stellung der Fensterscheibe oder des Fensterhebers in einen Hinterschnitt der Türschale eingreift. Dabei kann der Schwenkarm als Teleskoparm ausgebildet und an einer Türschale angelenkt sowie über eine Drehfeder gegen die Fensterscheibe oder den Fensterheber vorgespannt sein.

In einer alternativen Ausführungsform kann das Bauteil im wesentlichen rechtwinklig zur Fensterscheibe oder zum Fensterheber beweglich und federelastisch an der Fensterscheibe oder dem Fensterheber abgestützt werden, wobei das Bauteil in der vollständig angehobenen Stellung der Fensterscheibe oder des Fensterhebers an einem mit der Fensterscheibe oder dem Fensterheber verbundenen Mitnehmer oder Auflager anliegt.

Bei den vorstehenden Ausführungsformen kann das Bauteil mit einer Scheibenwisch- oder Scheibenwascheinrichtung verbunden werden und damit in einfacher Weise eine Zusatzfunktion erfüllen.

Die erfindungsgemäße Lösung ermöglicht alternativ oder zusätzlich zu einer reinen Abdeckfunktion insbesondere zur Verbesserung der Einbruchsicherheit auch eine Verstärkungsfunktion zur Verbesserung der Crashsicherheit der Fahrzeugtür, indem das Bauteil mit der Fensterscheibe oder mit dem Fensterheber verbunden wird und bei einer vorgebbaren Stellung der Fensterscheibe oder des Fensterhebers, vorzugsweise in der oberen Endlage der Fensterscheibe oder des Fensterhebers, zumindest einen Kraftschluss zwischen den Türschalen herstellt.

In einer ersten Variante weist das Bauteil den Türschalen zugeordnete Verbindungsarme auf, deren Kontur mit der Kontur der Türschalen im Eingriffsbereich des Bauteils mit den Türschalen im wesentlichen übereinstimmt.

Weiterhin kann die Kontur der Verbindungsarme, zumindest die des zur Türaußenschale gerichteten Verbindungsarms, eine Wasserablaufrinne einschließen und damit die Türeinbauten vor Feuchtigkeit schützen.

Vorzugsweise besteht das Bauteil aus mit den Türschalen verbundenen Sicherungselementen und einem mit der Fensterscheibe oder dem Fensterheber verbundenen und vorzugsweise an der Unterkante der Fensterscheibe oder des Fensterhebers befestigten Verbindungselement, das in einer vorgebbaren Stellung der Fensterscheibe oder des Fensterhebers, vorzugsweise in der oberen Endlage der Fensterscheibe oder des Fensterhebers, zumindest kraftschlüssig mit den an den Türschalen angenieteten, angeschweißten oder als Teil eines Strangpressprofils der Türschalen ausgebildeten Sicherungselementen verbunden ist.

Die Verbindung zwischen den Sicherungselementen und dem Verbindungselement kann über Sicherungsbolzen erfolgen. Alternativ können die Sicherungselemente im Verbindungsbereich mit dem Verbindungselement gelocht oder geschlitzt sein und das Verbindungselement mit auf die Lochung oder die Schlitze der Sicherungselemente ausgerichtete Eingriffsabschnitte aufweisen, die in der vorgegebenen, insbesondere obersten Stellung der Fensterscheibe oder des Fensterhebers in die Sicherungselemente eingreifen.

Weiterhin können die Sicherungselemente und das Verbindungselement einen Formschluss nach Art einer Verzahnung herstellen.

Insgesamt schafft die erfindungsgemäße Lösung eine Reduzierung des Rohbaugewichts der Kraftfahrzeugtür, eine deutliche Verbesserung des Einbruchschutzes, eine Verbesserung der Front- und Seitencrashsituation der Kraftfahrzeugtür, ermöglicht Zusatzfunktionen für die Fensterscheibe beispielsweise durch die Integration von Wisch-, Spül- und Wascheinrichtungen und schützt den Innenraum des Türkörpers bzw. den Türschacht durch die Integration einer Wasserableitrinne in dem kraftübertragenden Bauteil, so dass im Türschacht angeordnete Funktionselemente einer Kraftfahrzeugtür unabhängig davon, ob sie im Feucht- oder Trockenraumbereich des Türschachtes angeordnet sind, besser gegenüber Feuchtigkeit geschützt sind.

Anhand mehrerer Ausführungsbeispiele, die in den Figuren der Zeichnung dargestellt sind, soll der Erfindung zu Grunde liegende Gedanke sowie das Anwendungsgebiet der Erfindung weiter erläutert werden. Es zeigen:
- Fig. 1 -: eine perspektivische Explosionsdarstellung einer Kraftfahrzeugtür;
- Fig. 2 -: einen vertikalen Schnitt durch die Kraftfahrzeugtür gemäß Fig. 1;
- Fig. 3 -: einen Schnitt durch den Türkörper einer Kraftfahrzeugtür im Bereich der Türschachtleiste mit einem zwischen der Fensterscheibe und der Türaußenschale angeordneten, schwenkbaren Bauteil;
- Fig. 4 -: einen Schnitt wie in Fig. 3 mit einem mit der Türaußenschale verbundenen und gleitend an der Fensterscheibe anliegenden Bauteil;
- Fig. 5 -: einen Schnitt durch den Türkörper im Bereich der Türschachtleiste mit einem an der Unterkante der Fensterscheibe befestigten Bauteil zur Kraftübertragung und Verbindung der Türaußenschale mit der Türinnenschale;
- Fig. 6 -: einen Schnitt wie in Fig. 5 mit einem mehrteiligen, kraftübertragenden Bauteil, dessen Teile in der oberen Schließstellung der Fensterscheibe formschlüssig miteinander verbundenen sind;
- Fig. 7 -: einen Schnitt durch einen Türkörper im Bereich der Türschachtleiste mit einem Bauteil wie in Fig. 6 mit gelochter bzw. geschlitzter Verbindung der Einzelteile des Bauteils;
- Fig. 8 -: eine Draufsicht auf einen mit einer Türschale verbundenen Verbindungsarm des kraftübertragenden Bauteils;
- Fig. 9 -: einen Schnitt durch einen Türkörper im Bereich der Türschachtleiste mit einem Bauteil wie in Fig. 8 mit konstruktiven Maßnahmen zur Verringerung des Abstandes zu den Türschalen;
- Fig. 10 -: eine perspektivische Ansicht der Verbindung eines Sicherungselementes mit dem Verbindungselement eines kraftübertragenden Bauteils;
- Fig. 11 -: eine vergrößerte Teilansicht eines Sicherungselementes und eines Teils des Verbindungselementes und
- Fig. 12 -: eine schematische Teilansicht der Verbindung zwischen einem Verbindungselement und Sicherungselementen eines kraftübertragenden Bauteils.

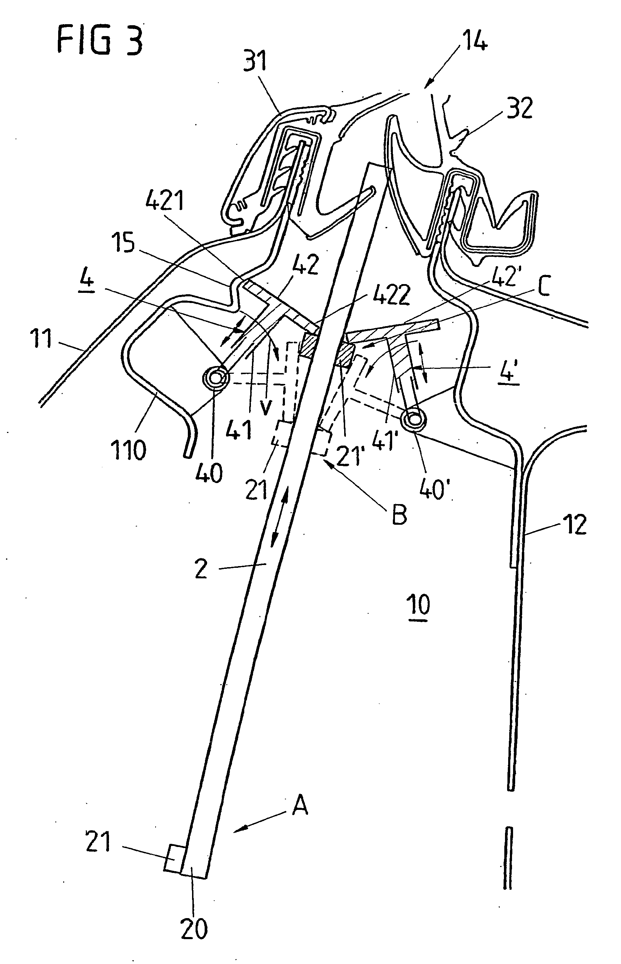

Fig. 3 zeigt einen Schnitt durch einen Türkörper im Bereich der Türschachtleiste 14, in der mit der Türaußenschale 11 bzw. der Türinnenschale 12 verbundene Dichtungselemente 31, 32 angeordnet sind und an einer in Richtung des Doppelpfeiles beweglichen, aus dem Türschacht 10 anhebbaren bzw. in den Türschacht 10 absenkbaren Fensterscheibe 2 anliegen. Die Fensterscheibe 2 ist in drei verschiedenen Bewegungsabschnitten A, B und C dargestellt, nämlich in einer in den Türschacht 10 abgesenkten Stellung A, einer mittleren Stellung B und einer obersten, das heißt im wesentlichen aus dem Türschacht 10 herausgehobenen Stellung C.

Ein an der Türaußenschale 11 bzw. einer Brüstungsverstärkung 110 der Türaußenschale 11 dreh- oder schwenkbar befestigtes Bauteil 4 sowie ein an der Türinnenschale 12 befestigtes, ebenfalls dreh- oder schwenkbar befestigtes Bauteil 4' weisen einen längenveränderlichen Schwenkarm 41 bzw 41' und einen gegenüber dem Anlenkpunkt des Schwenkarmes 41, 41' an der Brüstungsverstärkung 110 der Türaußenschale 11 bzw. der Türinnenschale 12 gegenüberliegenden Ende angeordneten, im Wesentlichen senkrecht zum längenveränderlichen Schwenkarm 41, 41' verlaufenden Überbrückungsarm 42 bzw. 42' auf. Die Schwenkarme 41, 41' sind als Teleskoparme ausgebildet und weisen ein Verschiebegelenk auf, so dass der Abstand der Überbrückungsarme 42, 42' von den Anlenkungen der Schwenkarme 41, 41' variabel sind.

Aufgrund einer an den Anlenkpunkten der Bauteile 4, 4' angeordneten Drehfeder 40 bzw. 40' sind die Bauteile 4, 4' in Richtung der Pfeile V vorgespannt und liegen mit der Oberseite der Überbrückungsarme 42, 42' an der Außenfläche der Fensterscheibe 2 an, wenn sich diese im Türschacht 10 befindet.

An der Unterkante 20 der Fensterscheibe 2 sind beidseitig Mitnehmer 21, 21' befestigt, die mit dem Fensterscheibenhub ihre Lage verändern und in der Stellung B der Fensterscheibe 2 an das eine Ende 422 der Überbrückungsarme 42, 42' des Bauteils 4 anschlagen. In dieser gestrichelt dargestellten Position der Bauteile 4, 4' führt ein weiteres Anheben der Fensterscheibe 2 zu einer Schwenkbewegung der Bauteile 4, 4' entgegen der Vorspannrichtung V bis diese in der obersten Stellung C der Fensterscheibe 2, das heißt in deren vollständig aus dem Türschacht 10 ausgefahrenem Zustand, mit dem anderen Ende 421 der Überbrückungsarme 42, 42' in einen Hinterschnitt 15 der Brüstungsverstärkung 110 der Türaußenschale 11 bzw. der Türinnenschale 12 hineingedreht werden.

In dieser Stellung sind die Bauteile 4, 4' zwischen den Mitnehmern 21, 21' und dem Hinterschnitt 15 sowie einem gleichartigen Hinterschnitt der Türinnenschale 12 blockiert und dichten den Türschacht 10 gegenüber Eingriffen über die mit der Türaußenschale 11 verbundene Dichtung 31 bzw die mit der Türinnenschale 12 verbundene Dichtung 32 ab. Dadurch ist die Einbruchsicherheit durch einen Eingriff über die Türschachtleiste 14 wesentlich erhöht, da das im Türschacht 10 befindliche Türschloss nicht über den zwischen der Fensterscheibe 2 und der Türaußenschale 11 bzw. der Türinnenschale 12 im Bereich des Türschachtes 14 gebildeten Spalt manipulierbar ist.

Vorzugsweise ist das Ende 422 der Überbrückungsarme 42, 42', an dem die Mitnehmer 21, 21' angreifen, mit einem Gleitstück versehen, um die Reibung zwischen der Oberfläche der Fensterscheibe 2 und den Überbrückungsarmen 42, 42' zu verringern.

Obwohl zur Diebstahlsicherung die Anordnung nur eines Bauteils 4 zwischen der Türinnenschale 12 und der Fensterscheibe 2 ausreichend ist, stellt die Anordnung eines Bauteils 4' mit im wesentlichen übereinstimmender Funktion wie das Bauteil 4 bei entsprechender Gestaltung des an der Unterkante 20 der Fensterscheibe 2 befestigten Mitnehmers 21' eine zusätzliche Sicherung dar. Darüber hinaus wird in der obersten Stellung der Fensterscheibe 2, das heißt in der Position C gemäß Fig. 3, über die Bauteile 4, 4' auch eine kraftübertragende Verbindung zwischen der Türaußenschale 11 und der Türinnenschale 12 hergestellt, die über die beidseitig an der Unterkante 20 der Fensterscheibe 2 befestigten Mitnehmer 21, 21' übertragen wird. Diese Anordnung verbessert auch bei abgesenkter Fensterscheibe 2 die Sicherheit gegenüber einem Eingriff über die Türschachtleiste 14 im Bereich zwischen der Fensterscheibe 2 und der Türinnenschale 12, wodurch beispielsweise in diesem Bereich angeordnete Türbauteile manipuliert werden könnten.

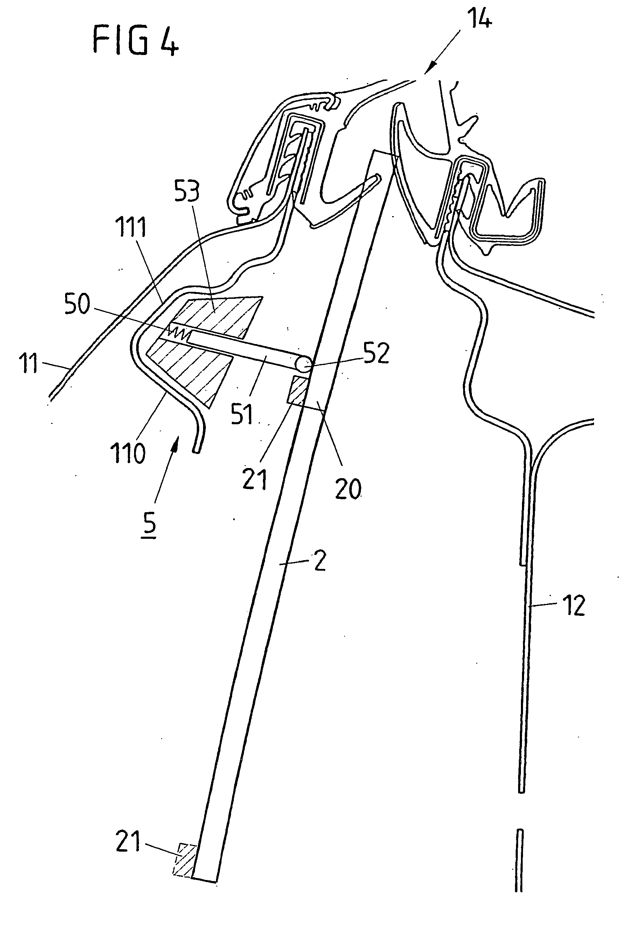

Das in Fig. 4 dargestellte Bauteil 5 weist eine ähnliche Funktion auf wie das in Fig. 3 dargestellte Bauteil 4 auf, ist aber nicht schwenkbar an der Türaußenschale befestigt, sondern mit einem Grundkörper 53 in einer Ausnehmung 111 der Brüstungsverstärkung 110 der Türaußenschale 11 angeordnet. Ein Sicherungsarm 51 des Bauteils 5 ist im Wesentlichen senkrecht zur Ebene der Fensterscheibe 2 in dem Grundkörper 53 geführt und gegenüber diesem mittels einer Druckfeder 50 federelastisch abgestützt, so dass der Sicherungsarm 51 mit seinem der Druckfeder 50 gegenüberliegenden Ende vorzugsweise über ein Gleitstück oder eine Gleitrolle 52 an der Außenseite der Fensterscheibe 2 abgestützt ist. Auf Grund der Führung des Sicherungsarms 51 in dem Grundkörper 53 ist eine hinreichende Festigkeit und Sicherheit gegenüber einem Abknicken des Sicherungsarms 51 gegeben, so dass ein Eingriff in den Türschacht 10 über die Türschachtleiste 14 zumindest wesentlich erschwert wird.

Eine zusätzliche Sicherheit gegenüber äußeren Eingriffen kann analog zu der Anordnung gemäß Fig. 3 ein mit der Unterkante 20 der Fensterscheibe 2 verbundener Mitnehmer 21 bewirken, der in der obersten Stellung der Fensterscheibe 2 fest am Sicherungsarm 51 anliegt und damit ein Umbiegen oder Abknicken des Sicherungsarms 51 verhindert.

Das in den Fig. 3 und 4 dargestellte Bauteil 4 bzw. 5 kann zusätzlich mit einer Scheibenwisch- und/oder Scheibenwascheinrichtung verbunden werden, die bei jeder Bewegung der Fensterscheibe 2 die Oberfläche der Fensterscheibe 2 reinigt.

Auch in der in Fig. 4 dargestellten Ausführungsform kann ein dem Bauteil 5 entsprechendes Bauteil zwischen der Türinnenschale 12 und der Fensterscheibe 2 angeordnet werden, so dass in der obersten Stellung der Fensterscheibe 2 eine unmittelbare Verbindung zwischen beiden Bauteilen über die Scheibenunterkante 20 bzw. den an der Scheibenunterkante 20 befestigten Mitnehmer 21 hergestellt werden, die die Crashsicherheit der Kraftfahrzeugtür durch die kraftschlüssige Verbindung zwischen den Türschalen 11, 12 erhöht.

Um eine Kraftübertragung über die Fensterscheibe 2 zu vermeiden, kann der Mitnehmer 21 an der Unterkante 20 der Fensterscheibe 2 so geformt sein, dass die Sicherungsarme 51 in der obersten Stellung der Fensterscheibe 2 in entsprechende Ausnehmung des Mitnehmers 21 einrasten und damit eine unmittelbare kraftschlüssige Verbindung der Sicherungsarme über den Mitnehmer 21 bewirken.

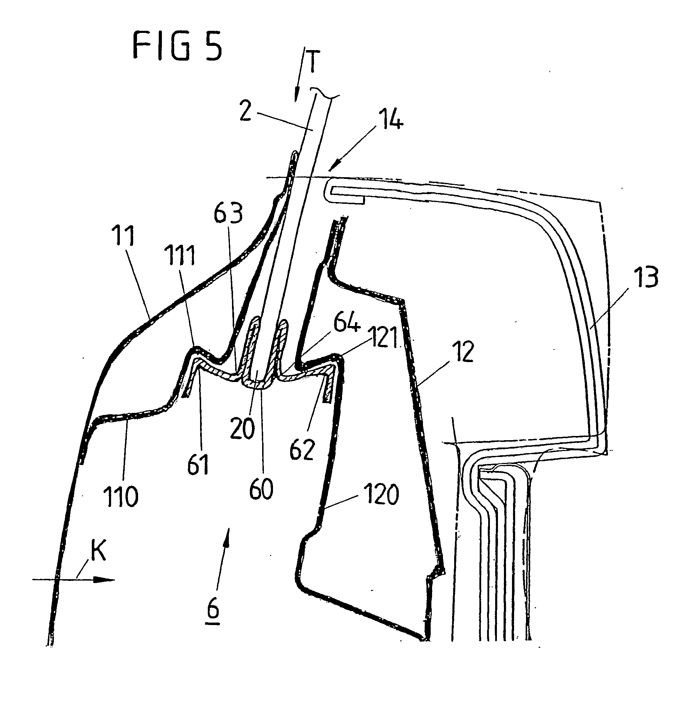

Fig. 5 zeigt in einem Schnitt durch den Türkörper im Bereich der Türschachtleiste 14 eine weitere Variante der erfindungsgemäßen Lösung, bei der die Unterkante 20 der Fensterscheibe 2 mit einem kraftübertragenden Bauteil 6 verbunden ist, das in der obersten Stellung der Fensterscheibe 2 eine kraftschlüssige Verbindung zwischen Brüstungsverstärkungen 110, 120 der Türaußenschale 11 und der Türinnenschale 12 herstellt. Zu diesem Zweck weist das Bauteil 6 einen die Unterkante 20 umgreifenden Verbindungsabschnitt 60 sowie beidseitig des Verbindungsabschnittes 60 Verbindungsarme 61, 62 auf, die der Kontur von Ausnehmung bzw. Einbuchtungen 111, 121 der Brüstungsverstärkungen 110, 120 der Türaußenschale 11 und der Türinnenschale 12 entsprechen.

Die Konturen der Verbindungsarme 61, 62 sind dabei so gewählt, dass Wasserablaufrinnen 63, 64 ausgebildet werden, die nach Art einer Dachrinne verhindern, dass über die Türschachtleiste 14 eindringende Feuchtigkeit auf in dem Türkörper angeordnete Türbauteile trifft.

Durch die unmittelbare Verbindung der Brüstungsverstärkungen 110, 120 der Türschalen 11, 12 mittels des kraftübertragenden Bauteils 6 in der obersten Stellung der Fensterscheibe 2 wird in Folge der Verbindung der Eigensteifigkeiten der Türschalen 11, 12 die Sicherheit gegenüber einem Seitenaufprallcrash in Richtung des Pfeils K deutlich erhöht, und zusätzlich verhindert, dass Eingriffe von außen beispielsweise in Richtung des Pfeils T im Bereich zwischen der Türaußenschale 11 und der Fensterscheibe 2 im Bereich der Türschachtleiste 14 verhindert werden.

Alternativ zu der in Fig. 5 dargestellten Befestigung des Bauteils 6 an der Unterkante 20 der Fensterscheibe 2 kann das Bauteil unmittelbar an dem Fensterheber zum Anheben und Absenken der Fensterscheibe 2 befestigt werden, wobei es nicht auf die Art des Fensterhebers, d.h. auf die Anordnung eines Kreuzarm- oder Seilfensterhebers ankommt. Weiterhin kann das Bauteil 6 an einer mit der Scheibenunterkante 20 verbundenen durchgängigen Schiene befestigt werden.

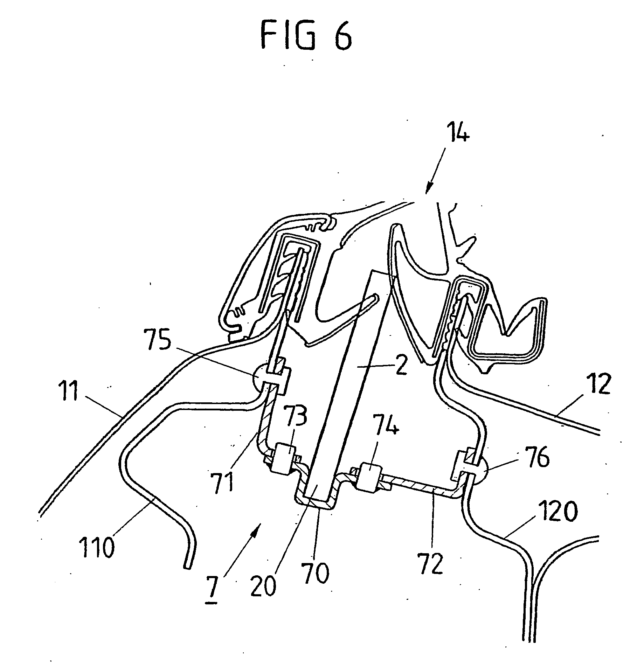

Fig. 6 zeigt eine Ausführungsform, bei der das kraftübertragende Bauteil 7 nicht formschlüssig mit Sicherungsarmen in entsprechende Formschlussbereiche der Türschalen 11, 12 eingreift, sondern mehrteilig ausgebildet ist und in der Schließstellung der Fensterscheibe 2 einen Formschluss zwischen seinen einzelnen Bauteilen herstellt.

Das kraftübertragende Bauteil 7 besteht aus einem mit der Unterkante 20 der Fensterscheibe 2 oder mit einem geeigneten Teil eines Fensterhebers zum Anheben und Absenken der Fensterscheibe 2 verbundenen Verbindungselement 70 und jeweils einem mit der Brüstungsverstärkung 110 der Türaußenschale 11 bzw. der Brüstungsverstärkung 120 der Türinnenschale 12 verbundenen Sicherungselement 71, 72, die in der Schließstellung der Fensterscheibe 2 über Sicherungsbolzen 73, 74 in das Verbindungselement 70 eingreifen. Die Sicherungselemente 71, 72 sind mittels Nieten 75, 76 mit den Brüstungsverstärkungen 110, 120 der Türschalen 11, 12 verbunden oder an diese angeschweißt oder angeklebt.

Die Verbindung des Verbindungselements 70 mit der Unterkante 20 der Fensterscheibe 2 kann mittels Klebung oder Formschlusses bzw. Klebung und Formschlusses oder über eine Stift- oder Schraubenverbindung erfolgen.

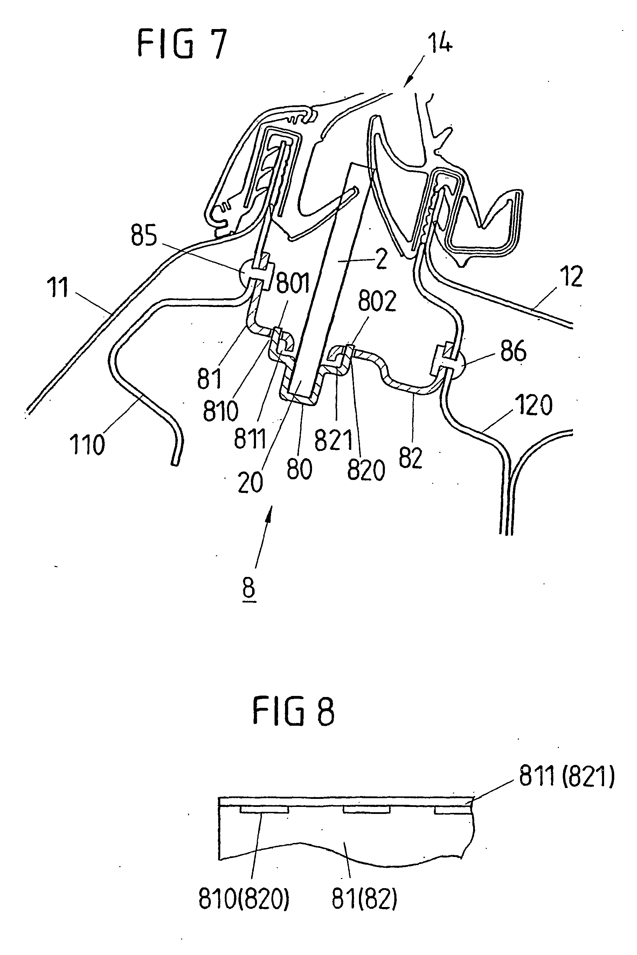

Fig. 7 zeigt ein die Türschalen 11, 12 in der Schließstellung der Fensterscheibe 2 kraftschlüssig miteinander verbindendes Bauteil 8, das aus einem mit der Unterkante 20 der Fensterscheibe 2 verbundenen Verbindungselement 80 und mit den Brüstungsverstärkungen 110, 120 der Türschalen 11, 12 verbundenen Sicherungsarmen 81, 82 besteht, die in der Schließstellung der Fensterscheibe 2 formschlüssig in das Verbindungselement 80 eingreifen. Die Sicherungsarme 81, 82 sind über Niet- oder Schraubverbindungen 85, 86 mit den Brüstungsverstärkungen 110, 120 der Türschalen 11, 12 verbunden und weisen gemäß Fig. 8 Schlitze 810, 820 auf, in die entsprechende kammartige Vorsprünge 801, 802 des Verbindungselements 80 eingreifen. Zur Herstellung eines gesicherten Formschlusses im Eingriffzustandes des Verbindungselements 80 mit den Sicherungsarmen 81, 82 weisen die Enden der Sicherungsarme 81, 82 Abbiegungen 811, 821 auf, die den Form- und Kraftschluss zwischen dem Verbindungselement 80 und den Sicherungselementen 81, 82 sichern.

Auch in dieser Ausführungsform kann das Verbindungselement 80 alternativ oder zusätzlich mit einem die Fensterscheibe 2 bewegenden Fensterheber verbunden sein.

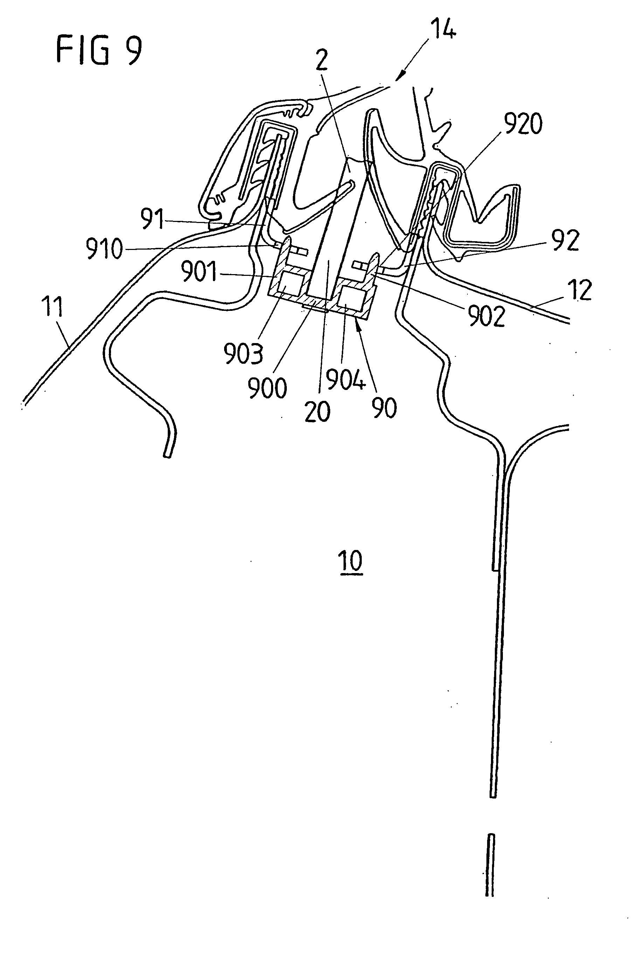

Fig. 9 zeigt ebenfalls einen Schnitt durch einen Türschacht 10 eines Türkörpers im Bereich der Türschachtleiste 14 mit einem kraftübertragenden Bauteil 9, das jeweils ein mit der Türaußenschale 11 und der Türinnenschale 12 verbundenes Sicherungselement 91, 92 und ein Verbindungselement 90 aufweist. Die Sicherungselemente 91, 92 können als Strangpressprofil ausgebildet sein und ein Teil der Außenschale 11 bzw. der Innenschale 12 sein. Das Verbindungselement 90 ist mit der Unterkante 20 der Fensterscheibe 2 verbunden, indem es beispielsweise an die Unterkante 20 mit einem die Unterkante 20 umfassenden Bereich 900 angeklebt ist.

Das Verbindungselement 90 weist zwei Verbindungsarme 903, 904 auf, die als entlang der freien Unterkante verlaufende Kastenprofile ausbildet sind, um den Abstand des Verbindungselements zu den Brüstungsverstärkungen 110, 120 der Türaußenschale 11 und der Türinnenschale 12 zu verringern, die zusätzlich durch eine Profilierung einen minimalen Abstand zu den Verbindungsarmen 903, 904 schaffen.

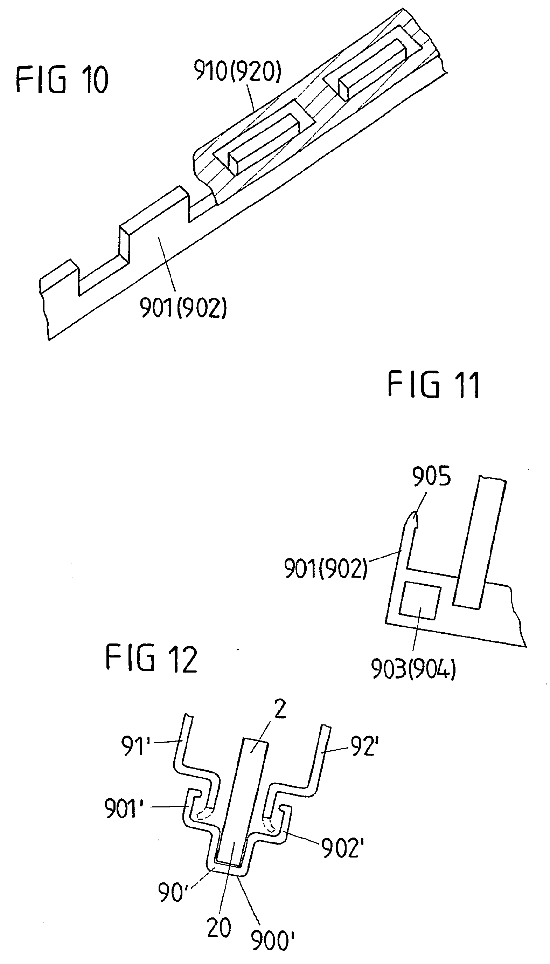

Die Verbindung zwischen den Verbindungsarmen 903, 904 und den Sicherungselementen 91, 92 wird gemäß Fig. 10 nach Art einer Verzahnung hergestellt, bei der von den Verbindungsarmen 90, 904 des Verbindungselementes 90 abstehende Zähne 901, 902 in Ausnehmungen 910 bzw. 920 der Sicherungselemente 91, 92 eingreifen. Durch diese über die gesamte Länge der Scheibenunterkante verlaufende Verbindung zwischen dem Verbindungselement 90 und den Sicherungselementen 91, 92 wird eine große Eingriffs- und Verbindungsfläche sichergestellt, die Front- und Seitenaufprallkräfte aufnimmt. Dabei dient das Kastenprofil der Sicherungselemente 91, 92 zusätzlich als Seitenaufprallträger, um auf die Kraftfahrzeugtür einwirkende Seitenaufprallkräfte abzubauen.

Die Verzahnungen 901 der Verbindungsarme 903, 904 des Verbindungselements 90 können gemäß Fig. 11 mit einem Hinterschnitt 905 versehen werden, um den Eingriff der Verzahnungen 901, 902 in die als Gegenprofile ausgebildeten Ausnehmungen 910, 920 der Sicherungselemente 91, 92 zu gewährleisten.

Fig. 12 zeigt schematisch eine weitere Variante der Verbindung zwischen einem Verbindungselement 90' und den Sicherungselementen 91', 92', bei der ein Formschluss in Y-Richtung des Kraftfahrzeugs ohne Bohrungen oder Ausnehmungen hergestellt wird und das sich in einer Ausführung als Strangpressprofil besonders eignet. Dabei greifen die Enden der Verbindungsarme 901', 902' des Verbindungselements 90', das mit einem Bereich 900' um die Unterkante 20 der Fensterscheibe 2 gelegt und mit dieser durch Klebung verbunden ist, um die Enden der Sicherungselemente 91', 92' nach Art einer Klammer und stellen dadurch eine kraftübertragende Verbindung zwischen den Türschalen 11, 12 gemäß Fig. 9 her.

Die vorstehend beschriebenen Ausführungsbeispiele verdeutlichen die verschiedenen Möglichkeiten der Realisierung des der Erfindung zu Grunde liegenden Gedankens zur Sicherung einer Kraftfahrzeugtür gegenüber Einbruch und zur Verbesserung des Front- und Seitenaufprallschutzes. Allen Ausführungsbeispielen gemeinsam ist das Verschlie-ßen des oberen Türschachtschlitzes zumindest bei vollständig aus dem Türschacht angehobener Fensterscheibe, so dass ein wirksamer Diebstahlschutz gewährleistest ist. Alternative Ausführungsformen sehen zusätzlich eine kraftübertragende Verbindung zwischen den Türschalen der Kraftfahrzeugtür vor, so dass Frontal- und Seitenaufprallkräfte durch eine Erhöhung der Eigensteifigkeit des Türkörpers besser aufgenommen werden. Der zusätzliche Material- und Montageaufwand ist gering gegenüber ansonsten erforderliche zusätzliche Maßnahmen zur Schlossabdeckung zur Verbesserung des Diebstahlschutzes bzw. zur Erhöhung der Eigensteifigkeit der Türschalen durch entsprechende Profilierungen bzw. stärkere Materialien, die zu einer Erhöhung des Eigengewichts der Kraftfahrzeugtür und damit des Kraftfahrzeugs führen.

### Bezugszeichenliste

- 1: Kraftfahrzeugtür
- 2: Fensterscheibe
- 3: Fensterheber
- 4, 4' - 9: kraftübertragende Bauteile
- 10: Türschacht
- 11 1: Türaußenschale
- 12: Türinnenschale
- 14: Türschachtleiste
- 15: Hinterschnitt
- 20: Unterkante
- 21, 21': Mitnehmer
- 31, 32: Dichtungselemente
- 40, 40': Drehfeder
- 41, 41': längenveränderlicher Schwenkarm
- 42, 42': Überbrückungsarm
- 50: Druckfeder
- 51: Sicherungsarm
- 52: Gleitrolle
- 53: Grundkörper
- 60: Verbindungsabschnitt
- 61, 62: Verbindungsarme
- 63,64: Wasserablaufrinne
- 70, 80, 90, 90': Verbindungselement
- 71, 72, 81, 82, 91, 92, 91', 92': Sicherungselemente
- 73, 74: Sicherungsbolzen
- 75, 76: Nieten
- 85, 86: Schraubverbindung
- 110, 120: Brüstungsverstärkung
- 111 1: Ausnehmung
- 801, 802: kammartige Vorsprünge
- 811, 821: Abbiegungen
- 900, 900': Bereich
- 901, 902, 901', 902': Zähne
- 903, 904: Verbindungsarme
- 910,920: Ausnehmungen

## Patentansprüche

1. Kraftfahrzeugtür (1) mit einem Türkörper aus einer Türaußenschale (11) und einer Türinnenschale (12), zwischen denen ein Türschacht (10) mit einem Fensterheber (3) zum Anheben und Absenken einer Fensterscheibe (2) ausgebildet ist, und mit mindestens einem innerhalb des Türschachtes (10) angeordneten Bauteil (4, 5), das eine Querverbindung zwischen der Fensterscheibe (2) oder dem Fensterheber (3) und mindestens einer Türschale (11, 12) herstellt,
**dadurch gekennzeichnet,**
**dass** das Bauteil (4 - 9) als kraftübertragendes und/oder als ein den Türspalt wenigstens über den Bereich des Türschlosses und/oder der mit dem Türschloss verbundenen Teile wie Gestänge, Bowden und dergleichen abdeckendes Bauteil ausgebildet ist und entweder mit einer Türschale (11, 12) verbunden und federelastisch an der Fensterscheibe (2) oder dem Fensterheber (3) abgestützt ist oder mit der Fensterscheibe (2) oder dem Fensterheber (3) verbunden ist und bei einer vorgebbaren Stellung der Fensterscheibe (2) oder des Fensterhebers (3), vorzugsweise in der oberen Endlage der Fensterscheibe (2) oder des Fensterhebers (3), einen Form- und/oder Kraftschluss zwischen den Türschalen (11, 12) herstellt.

2. Kraftfahrzeugtür nach Anspruch 1, **dadurch gekennzeichnet, dass** sich die Lage des Bauteils (4 - 9) mit der Bewegung der Fensterscheibe (2) oder des Fensterhebers (3) verändert und bei einer vorgegebenen Stellung der Fensterscheibe (2) oder des Fensterhebers (3) eine formschlüssige Querverbindung zwischen der Fensterscheibe (2) oder dem Fensterheber (3) und mindestens einer Türschale (11, 12) herstellt.

3. Kraftfahrzeugtür nach Anspruch 1 oder 2, **dadurch gekennzeichnet, dass** das Bauteil (4) mit Vorspannung an der Fensterscheibe (2) oder dem Fensterheber (3) anliegt und beim Anheben der Fensterscheibe (2) oder des Fensterhebers (3) aus dem Türschacht (10) mittels eines an der Fensterscheibe (2) oder am Fensterheber (3) angeordneten Mitnehmers oder Auflagers (21) in eine kraftübertragende Stellung mit einer Türschale (11, 12) verschwenkt.

4. Kraftfahrzeugtür nach Anspruch 3, **dadurch gekennzeichnet, dass** das Bauteil (4) einen längenveränderlichen Schwenkarm (41) und einen mit dem Schwenkarm (41) verbundenen Überbrückungsarm (42) aufweist, dessen eines Ende (422) über ein Gleitstück an der Fensterscheibe (2) oder dem Fensterheber (3) anliegt und dessen anderes Ende (421) zur Verbindung mit einer Türschale (11, 12) bei einer vorgegebenen Stellung der Fensterscheibe (2) oder des Fensterhebers (3) in einen Hinterschnitt (15) der Türschale (11, 12) eingreift.

5. Kraftfahrzeugtür nach Anspruch 4, **dadurch gekennzeichnet, dass** der Schwenkarm als Teleskoparm (41) ausgebildet und an einer Türschale (11, 12) angelenkt sowie über eine Drehfeder (40) gegen die Fensterscheibe (2) oder den Fensterheber (3) vorgespannt ist.

6. Kraftfahrzeugtür nach Anspruch 1 oder 2, **dadurch gekennzeichnet, dass** das Bauteil (5) im wesentlichen rechtwinklig zur Fensterscheibe (2) oder dem Fensterheber (3) beweglich und federelastisch an der Fensterscheibe (2) oder dem Fensterheber (3) abgestützt ist.

7. Kraftfahrzeugtür nach Anspruch 6, **dadurch gekennzeichnet, dass** das Bauteil (5) in der vollständig angehobenen Stellung der Fensterscheibe (2) oder des Fensterhebers (3) an einem mit der Fensterscheibe (2) oder dem Fensterheber (3) verbundenen Mitnehmer oder Auflager (21) anliegt.

8. Kraftfahrzeugtür nach mindestens einem der voranstehenden Ansprüche, **dadurch gekennzeichnet, dass** das Bauteil (5) mit einer Scheibenwisch- oder Scheibenwascheinrichtung verbunden ist.

9. Kraftfahrzeugtür nach Anspruch 1, **dadurch gekennzeichnet, dass** das Bauteil (6) den Türschalen (11, 12) zugeordnete Verbindungsarme (61, 62) aufweist, deren Kontur mit der Kontur (111, 121) der Türschalen (11, 12) im Eingriffsbereich des Bauteils (6) mit den Türschalen (11, 12) im wesentlichen übereinstimmt.

10. Kraftfahrzeugtür nach Anspruch 9, **dadurch gekennzeichnet, dass** die Kontur zumindest des zur Türaußenschale (11) gerichteten Verbindungsarms (61) eine Wasserablaufrinne (63) einschließt.

11. Kraftfahrzeugtür nach Anspruch 1, **dadurch gekennzeichnet, dass** das Bauteil (7, 8, 9) aus mit den Türschalen (11, 12) verbundenen Sicherungselementen (71, 72; 81, 82; 91, 92, 91', 92') und einem mit der Fensterscheibe (2) oder dem Fensterheber (3) verbundenen Verbindungselement (70, 80, 90) besteht, das in einer vorgebbaren Stellung der Fensterscheibe (2) oder des Fensterhebers (3), vorzugsweise in der oberen Endlage der Fensterscheibe (2) oder des Fensterhebers (3), zumindest kraftschlüssig mit den Sicherungselementen (71, 72; 81, 82; 91, 92, 91', 92') verbunden ist.

12. Kraftfahrzeugtür nach Anspruch 11, **dadurch gekennzeichnet, dass** die Sicherungselemente (71, 72; 81, 82; 91, 92, 91', 92') an den Türschalen (11, 12) angenietet, angeschweißt oder Teil eines Strangpressprofils der Türschalen (11, 12) sind.

13. Kraftfahrzeugtür nach Anspruch 11, **dadurch gekennzeichnet, dass** das Verbindungselement (70, 80, 90) an der Scheibenunterkante (20) der Fensterscheibe (2) oder an einer Unterkante des Fensterhebers (3) befestigt ist.

14. Kraftfahrzeugtür nach mindestens einem der voranstehenden Ansprüche 11 bis 13, **dadurch gekennzeichnet, dass** die Sicherungselemente (71, 72) mit dem Verbindungselement (70) über Sicherungsbolzen (73, 74) verbunden sind.

15. Kraftfahrzeugtür nach einem der voranstehenden Ansprüche 11 bis 13, **dadurch gekennzeichnet, dass** die Sicherungselemente (81, 82; 91, 92) im Verbindungsbereich mit dem Verbindungselement (80, 90) gelocht oder geschlitzt sind und dass das Verbindungselement (80, 90) mit auf die Lochung oder die Schlitze (810, 820; 910, 920) der Sicherungselemente (81, 82; 91, 92) ausgerichtete Eingriffsabschnitte (801, 802; 901, 902) in der vorgegebenen Stellung der Fensterscheibe (2) oder des Fensterhebers (3) in die Sicherungselemente (81, 82; 91, 92) eingreift.

16. Kraftfahrzeugtür nach Anspruch 11, **dadurch gekennzeichnet, dass** die Sicherungselemente (91', 92') im Eingriffsbereich mit dem Verbindungselement (90') eine kraftübertragende Verbindung mit dem Verbindungselement (90') zumindest in Y-Richtung des Kraftfahrzeugs eingehen.

17. Kraftfahrzeugtür nach einem der voranstehenden Ansprüche 11 bis 16, **dadurch gekennzeichnet, dass** die Sicherungselemente (91, 92) und das Verbindungselement (90) einen Formschluss nach Art einer Verzahnung herstellen.

18. Kraftfahrzeugtür nach einem der voranstehenden Ansprüche 11 bis 17, **dadurch gekennzeichnet, dass** das Verbindungselement (90) Verbindungsarme (901, 902) mit einem parallel zur Scheibenunterkante (20) verlaufenden Kastenprofil (903, 904) aufweist.

19. Kraftfahrzeugtür nach mindestens einem der voranstehenden Ansprüche, **dadurch gekennzeichnet, dass** die vorgebbare Stellung der Fensterscheibe (2) oder des Fensterhebers (3) zur Herstellung eines Form- und/oder Kraftschlusses zwischen der Fensterscheibe (2) oder dem Fensterheber (3) und den Türschalen (11, 12) bzw. unmittelbar zwischen den Türschalen (11, 12) die oberste Stellung der Fensterscheibe (2) bzw. des Fensterhebers (3) ist, in der die Fensterscheibe (2) einen Türausschnitt der Kraftfahrzeugtür (1) verschließt.

## Claims

1. Motor vehicle door (1) with a door body comprising a door outer shell (11) and a door inner shell (12) between which a door shaft (10) is formed in which a window lifter (3) is mounted for lifting and lowering a window pane (2), and with at least one component (4,5) which is mounted inside the door shaft (10) to produce a transverse connection between the window pane (2) or the window lifter (3) and the door outer shell (11) and/or the door inner shell (12) at least over a part of the width, running in the longitudinal direction of the vehicle door (1), of the window pane (2), window lifter (3), door outer shell (11) or door inner shell (12),
**characterised in that**
the component (4 - 9) is constructed as force-transferring component and/or as a component covering the door gap extending at least over the region of the door lock and/or the parts connected to the door lock such as rod linkage, Bowden cable and the like and connected either with a door shell (11, 12) and elastically supported on the window pane and/or the window lifter or is connected to the window pane (2) or to the window lifter (3) and with a predeterminable position of the window pane (2) or window lifter (3), preferably in the upper end position of the window pane (2) or the window lifter (3) produces at least a force locking engagement between the door shells (11, 12).

2. Motor vehicle door as claimed in Claim 1, **characterised in that** the position of the components (4 - 9) varies with the movement of the window pane (2) or the window lifter (3) and in a predetermined position of the window pane (2) or the window lifter (3) forms a shape-locking transverse connection between the window pane (2) or the window lifter (3) and at least one door shell (11, 12).

3. Motor vehicle door according to claim 1 or 2, **characterised in that** the component (4) bears with pretension against the window pane (2) or the window lifter (3) and during lifting of the window pane (2) or window lifter (3) swivels out from the door shaft (10) by means of a follower or support (21) mounted on the window pane (2) or window lifter (3) into a force-transferring position with a door shell (11, 12).

4. Motor vehicle door according to claim 3, **characterised in that** the component part (4) has a length-variable swivel arm (41) and a bridging arm (42) connected to the swivel arm (41), of which one end (422) bears through a slide member against the window pane (2) or the window lifter (3) and whose other end (421) for connecting with a door shell (11, 12) with a predetermined position of the window pane (2) or window lifter (3) engages in a relieved section (15) of the door shell (11, 12).

5. Motor vehicle door according to claim 4, **characterised in that** the swivel arm is formed as a telescopic arm (41) and is attached to a door shell (11, 12) as well as is pretensioned through a torsion spring (40) against the window pane (2) or the window lifter (3).

6. Motor vehicle door according to claim 1 or 2, **characterised in that** the component (5) is supported movable substantially at right angles to the window pane (2) or to the window lifter (3) and is supported spring elastically against the window pane (2) or the window lifter (3).

7. Motor vehicle door according to claim 6, **characterised in that** the component (5) in the fully raised position of the window pane (2) or the window lifter (3) bears against a follower or support (21) connected to the window pane (2) or window lifter (3).

8. Motor vehicle door according to at least one of the preceding claims, **characterised in that** the component (5) is connected to a windscreen wiper or wash device.

9. Motor vehicle door according to claim 1, **characterised in that** the component (6) has connecting arms (61, 62) associated with the door shells (11, 12) whose contour substantially coincides with the contour (111, 121,) of the door shells (11, 12) in the engagement region of the component (6) with the door shells (11, 12).

10. Motor vehicle door according to claim 9, **characterised in that** the contour at least of the connecting arm (61) directed to the door outer shell (11) includes a water drainage channel (63).

11. Motor vehicle door according to claim 1, **characterised in that** the component (7, 8, 9) consists of securing elements (71, 72, 81, 82, 91, 92, 91', 92') connected to the door shells (11, 12) and of a connecting element (70, 80, 90) connected to the window pane (2) or window lifter (3), which in a predeterminable position of the window pane (2) or window lifter (3) preferably in the upper end position of the window pane (2) or window lifter (3) is connected at least with force locking connection to the securing elements (71, 72; 81, 82, 91, 92, 91', 92').

12. Motor vehicle door according to claim 11, **characterised in that** the securing elements (71, 72, 81, 82, 91, 92, 91', 92') are riveted or welded to the door shells (11, 12) or are part of an extruded pressed profile of the door shells (11, 12).

13. Motor vehicle door according to claim 11, **characterised in that** the connecting element (70, 80, 90) is fixed on the lower edge (20) of the window pane (2) or on a lower edge of the window lifter (3).

14. Motor vehicle door according to at least one of the preceding claims 11 to 13, **characterised in that** the securing elements (71, 72) are connected to the connecting element (70) through securing bolts (73, 74).

15. Motor vehicle door according to one of the preceding claims 11 to 13, **characterised in that** the securing elements (81, 82; 91, 92) are punctured or slit in the connection region with the connecting element (80, 90) and that the connecting element (80, 90) engages in the securing elements (81, 82, 91, 92) by engagement sections (801, 902, 901, 902) aligned with the holes or slits (810, 820, 910, 920) of the securing elements (81, 82; 91, 92) in the predetermined position of the window pane (2) or window lifter (3).

16. Motor vehicle door according to claim 11, **characterised in that** the securing elements (91', 92') in the engagement region with the connecting element (90') make a force-transferring connection with the connecting element (90') at least in the Y-direction of the motor vehicle.

17. Motor vehicle door according to one of the preceding claims 11 to 16, **characterised in that** the securing elements (91, 92) and the connecting element (90) produce a positive locking engagement in the manner of a toothed connection.

18. Motor vehicle door according to at least one of the preceding claims, **characterised in that** the connecting element (90) has connecting arms (901, 902) with a box profile (903, 904) running parallel to the lower edge (20) of the window pane.

19. Motor vehicle door according to at least one of the preceding claims, **characterised in that** the predeterminable position of the window pane (2) or window lifter (3) for producing a positive locking and/or force locking connection between the window pane (2) or window lifter (3) and the door shells (11, 12) or directly between the door shells (11, 12) is the uppermost position of the window pane (2) or window lifter (3) in which the window pane (2) closes a door cut out section of the vehicle door (1).

## Revendications

1. Porte de véhicule automobile (1), comportant un corps de porte constitué par une coque extérieure de porte (11) et par une coque intérieure de porte (12) entre lesquelles est réalisé un puits de porte (10) avec un lève-vitre (3) pour lever et abaisser une vitre (2), et comportant au moins un composant (4, 5) agencé à l'intérieur du puits de porte (10), qui établit une liaison transversale entre la vitre (2) ou le lève-vitre (3) et au moins une coque de porte (11, 12),
**caractérisée en ce que**
le composant (4 à 9) est réalisé sous forme de composant transmettant la force et/ou sous forme de composant recouvrant la fente de porte au moins sur la région de la serrure de porte et/ou des parties reliées à la serrure de porte telles qu'une tringlerie, un câble Bowden et similaires, et est soit relié à une coque de porte (11, 12) et soutenu élastiquement à la manière d'un ressort sur la vitre (2) ou sur le lève-vitre (3) soit relié à la vitre (2) ou au lève-vitre (3) et établit une coopération de formes et/ou de forces entre les coques de porte (11, 12) en cas de position prédéterminable de la vitre (2) ou du lève-vitre (3), de préférence dans la position terminale supérieure de la vitre (2) ou du lève-vitre (3).

2. Porte de véhicule automobile selon la revendication 1, **caractérisée en ce que** la position du composant (4 à 9) varie avec le mouvement de la vitre (2) ou du lève-vitre (3) et, en cas de position prédéterminée de la vitre (2) ou du lève-vitre (3), une liaison transversale par coopération de formes est établie entre la vitre (2) ou le lève-vitre (3) et au moins une coque de porte (11, 12).

3. Porte de véhicule automobile selon la revendication 1 ou 2, **caractérisée en ce que** le composant (4) est en appui avec précontrainte sur la vitre (2) ou sur le lève-vitre (3) et lors de la levée de la vitre (2) ou du lève-vitre (3), il pivote hors du puits de porte (10) au moyen d'un toc d'entraînement ou d'un coussinet (21) agencé sur la vitre (2) ou sur le lève-vitre (3) jusque dans une position de transmission de force avec une coque de porte (11, 12).

4. Porte de véhicule automobile selon la revendication 3, **caractérisée en ce que** le composant (4) présente un bras pivotant (41) variable en longueur et un bras de pontage (42) relié au bras pivotant (41), dont une extrémité (422) est en appui via une pièce coulissante sur la vitre (2) ou sur le lève-vitre (3) et dont l'autre extrémité (421) s'engage dans une contre-dépouille (15) de la coque de porte (11, 12) pour établir une liaison avec une coque de porte (11, 12) lors d'une position prédéterminée de la vitre (2) ou du lève-vitre (3).

5. Porte de véhicule automobile selon la revendication 4, **caractérisée en ce que** le bras pivotant est réalisé sous forme de bras télescopique (41) et est articulé sur une coque de porte (11, 12) et précontraint via un ressort de torsion (40) contre la vitre (2) ou contre le lève-vitre (3).

6. Porte de véhicule automobile selon la revendication 1 ou 2, **caractérisée en ce que** le composant (5) est mobile sensiblement en angle droit par rapport à la vitre (2) ou au lève-vitre (3) et est soutenu élastiquement avec effet de ressort sur la vitre (2) ou sur le lève-vitre (3).

7. Porte de véhicule automobile selon la revendication 6, **caractérisée en ce que** dans la position totalement soulevée de la vitre (2) ou du lève-vitre (3), le composant (5) est en appui sur un toc d'entraînement ou sur un coussinet (21) relié à la vitre (2) ou au lève-vitre (3).

8. Porte de véhicule automobile selon au moins l'une des revendications précédentes, **caractérisée en ce que** le composant (5) est relié à un dispositif d'essuie-glace ou de lave-glace.

9. Porte de véhicule automobile selon la revendication 1, **caractérisée en ce que** le composant (6) présente des bras de liaison (61, 62) associés aux coques de porte (11, 12), dont le contour coïncide sensiblement avec le contour (111, 121) des coques de porte (11, 12) dans la région d'engagement du composant (6) avec les coques de porte (11, 12).

10. Porte de véhicule automobile selon la revendication 9, **caractérisée en ce que** le contour au moins du bras de liaison (61) orienté vers la coque extérieure de porte (11) enferme une goulotte d'écoulement d'eau (63).

11. Porte de véhicule automobile selon la revendication 1, **caractérisée en ce que** le composant (7, 8, 9) est constitué par des éléments de sécurité (71, 72 ; 81, 82 ; 91, 92, 91', 92') reliés aux coques de porte (11, 12) et par un élément de liaison (70, 80, 90) relié à la vitre (2) ou au lève-vitre (3), lequel est relié au moins par coopération de forces avec les éléments de sécurité (71, 72 ; 81, 82 ; 91, 92, 91', 92') dans une position prédéterminable de la vitre (2) ou du lève-vitre (3), de préférence dans la position terminale supérieure de la vitre (2) ou du lève-vitre (3).

12. Porte de véhicule automobile selon la revendication 11, **caractérisée en ce que** les éléments de sécurité (71, 72 ; 81, 82 ; 91, 92, 91', 92') sont rivés, soudés sur les coques de porte (11, 12) ou font partie d'un profil extrudé des coques de porte (11, 12).

13. Porte de véhicule automobile selon la revendication 11, **caractérisée en ce que** l'élément de liaison (70, 80, 90) est fixé sur l'arête inférieure (20) de la vitre (2) ou sur une arête inférieure du lève-vitre (3).

14. Porte de véhicule automobile selon au moins l'une des revendications précédentes 11 à 13, **caractérisée en ce que** les éléments de sécurité (71, 72) sont reliés à l'élément de liaison (70) par des boulons de sécurité (73, 74).

15. Porte de véhicule automobile selon au moins l'une des revendications précédentes 11 à 13, **caractérisée en ce que** les éléments de sécurité (81, 82 ; 91, 92) sont percés ou fendus dans la région de liaison avec l'élément de liaison (80, 90) et **en ce que** dans la position prédéterminée de la vitre (2) ou du lève-vitre (3), l'élément de liaison (80, 90) s'engage dans les éléments de sécurité (81, 82 ; 91, 92) avec des tronçons d'engagement (801, 802 ; 901, 902) alignés sur le perçage ou sur les fentes (810, 820 ; 910, 920) des éléments de sécurité (81, 82 ; 91,92).

16. Porte de véhicule automobile selon la revendication 11, **caractérisée en ce que** les éléments de sécurité (91', 92') réalisent dans la région d'engagement avec l'élément de liaison (90') une liaison de transmission de force avec l'élément de liaison (90'), au moins en direction Y du véhicule.

17. Porte de véhicule automobile selon l'une des revendications précédentes 11 à 16, **caractérisée en ce que** les éléments de sécurité (91, 92) et l'élément de liaison (90) établissent une coopération de formes à la manière d'une denture.

18. Porte de véhicule automobile selon l'une des revendications précédentes 11 à 17, **caractérisée en ce que** l'élément de liaison (90) présente des bras de liaison (901, 902) avec un profil en caisson (903, 904) s'étendant parallèlement à l'arête inférieure (20) de la vitre.

19. Porte de véhicule automobile selon au moins l'une des revendications précédentes, **caractérisée en ce que** la position prédéterminable de la vitre (2) ou du lève-vitre (3) pour établir une coopération de formes et/ou de forces entre la vitre (2) ou le lève-vitre (3) et les coques de porte (11, 12) ou directement entre les coques de porte (11, 12) est la position la plus élevée de la vitre (2) ou du lève-vitre (3) dans laquelle la vitre (2) ferme une découpe de porte de la porte du véhicule (1).
